# FASCICULE DE BREVET EUROPEEN

(11) **EP 2 729 769 B1**
(45) Date de publication et mention de la délivrance du brevet: **01.07.2015**
(21) Numéro de dépôt: 12729406.4
(22) Date de dépôt: 06.06.2012
(51) Int. Cl.: G01D 9/42

(54) **SYSTEME ET PROCEDE DE DETERMINATION D'UN ETAT DE FONCTIONNEMENT D'UN APPAREIL ELECTRIQUE**
SYSTEM UND VERFAHREN ZUR BESTIMMUNG DES BETRIEBSZUSTANDES EINER ELEKTRISCHEN VORRICHTUNG
SYSTEM AND METHOD FOR DETERMINING THE OPERATIONAL STATE OF AN ELECTRIC APPARATUS

(30) Priorité: 04.07.2011 FR 1155986
(43) Date de publication de la demande: 14.05.2014
(73) Titulaire: Schneider Electric Industries SAS, 92500 Rueil-Malmaison (FR)
(72) Inventeur: GASSION, Romain, F-38140 Izeaux (FR); CHICHE, Thierry, F-38330 Saint Ismier (FR)
(74) Mandataire: Bié, Nicolas
(86) Numéro de dépôt international: PCT/EP2012/060653
(87) Numéro de publication internationale: WO 2013/004443

(56) Documents cités:
- FR-A1- 2 928 730
- US-A- 5 016 025
- US-A1- 2003 058 097
- US-A1- 2005 190 069

## Description

### Domaine technique de l'invention

La présente invention se rapporte à un système et procédé de détermination d'un état de fonctionnement d'un appareil électrique.

### Etat de la technique

Il est connu du document FR2928730 un dispositif et un procédé d'identification des défauts de fonctionnement d'un appareil électrique. Lorsque l'appareil électrique présente un défaut de fonctionnement, celui-ci émet un signal lumineux correspondant au défaut de fonctionnement. Le dispositif décrit dans le brevet FR 2 928 730 comporte des moyens de récupération du signal lumineux émis, des moyens d'analyse du signal lumineux récupéré et des moyens de génération d'un signal sonore correspondant, ledit signal sonore étant destiné à être transmis à distance pour être analysé afin d'identifier le défaut de fonctionnement correspondant. Dans ce document, les moyens de récupération du signal lumineux sont des câbles de connexion branchés aux bornes des diodes électroluminescentes de l'appareil électrique pour les relier au dispositif permettant l'identification des défauts de fonctionnement. Les moyens d'analyse comportent un microcontrôleur destiné à compter le nombre de clignotements des diodes. En fonction de l'état des diodes, le signal sonore généré peut être transmis à distance, par exemple à travers un réseau de communication auquel est connecté le dispositif. Ainsi un opérateur pourra récupérer à distance, par téléphone, le signal sonore représentatif du défaut de fonctionnement de l'appareil électrique. La solution décrite dans ce document est attachée à un appareil particulier et ne permet pas à un opérateur de pouvoir analyser un signal lumineux d'un autre appareil sans pourvoir cet autre appareil d'un dispositif dédié.

Le but de l'invention est donc de proposer un système et un procédé de détermination d'un état de fonctionnement d'un appareil électrique dans lequel il est possible de récupérer des données représentatives de l'état de fonctionnement de l'appareil électrique sans avoir recours à un dispositif dédié et intégré à cet appareil et sans employer de connexion filaire avec cet appareil.

### Exposé de l'invention

Ce but est atteint par un système de détermination d'un état de fonctionnement d'un appareil électrique, ledit appareil électrique comportant une face présentant au moins des organes de signalisation visuelle statique ou dynamique de l'état de fonctionnement de l'appareil électrique, ledit système comportant :
- un terminal mobile doté de moyens de captures photo et/ou vidéo pour capturer une ou plusieurs photos et/ou vidéos de ladite face de l'appareil électrique et une interface de communication agencée pour envoyer des données représentatives de chaque photo et/ou vidéo de la face de l'appareil électrique sur un réseau de communication,
- un serveur central comportant une interface de communication connectée au réseau de communication et agencée pour recevoir lesdites données représentatives de chaque photo et/ou vidéo provenant du terminal mobile et des moyens de traitement destinés à comparer lesdites données représentatives de chaque photo et/ou vidéo reçues avec des données représentatives de photos et/ou vidéos stockées dans une base de données gérée par le serveur central, à générer des données représentatives de l'état de fonctionnement de l'appareil électrique à partir des données représentatives de chaque photo et/ou vidéo reçues et identifiées dans la base de données et à envoyer au terminal mobile via le réseau de communication lesdites données représentatives de l'état de fonctionnement de l'appareil électrique.

Selon une particularité de l'invention, la base de données stocke également des données représentatives d'une identification de l'appareil électrique à comparer avec des données représentatives d'une photo de la face de l'appareil électrique envoyée par le terminal mobile.

Selon une autre particularité, le terminal mobile comporte des moyens de traitement destinés à lancer et gérer une application de détermination de l'état de fonctionnement de l'appareil électrique, ladite application permettant d'activer les moyens de capture photo et/ou vidéo et de visualiser les données représentatives de l'identification de l'appareil électrique et les données représentatives de l'état de fonctionnement de l'appareil électrique.

Selon une autre particularité, la base de données stocke, pour l'appareil électrique, un algorithme d'analyse permettant de générer les données représentatives de l'état de fonctionnement de l'appareil électrique à partir des données représentatives de chaque photo et/ou vidéo reçues du terminal mobile et identifiées dans la base de données.

Selon une autre particularité, le réseau de communication est un réseau sans-fil de téléphonie mobile ou un réseau de communication de type IP connecté à l'Internet.

L'invention concerne également un procédé de détermination de l'état d'un appareil électrique, ledit appareil électrique comportant une face présentant des organes de réglage de sa configuration et/ou de visualisation statique ou dynamique de son état, ledit procédé comportant les étapes suivantes :
- capture d'une ou plusieurs photos et/ou vidéos de ladite face de l'appareil électrique à l'aide d'un terminal mobile,
- transmission par le terminal mobile de données représentatives de chaque photo et/ou vidéo à travers un réseau de communication vers un serveur central,
- comparaison par le serveur central des données représentatives de chaque photo et/ou vidéo avec des données représentatives de photos et/ou vidéos stockées dans une base de données gérée par le serveur central,
- génération par le serveur central des données représentatives de l'état de fonctionnement de l'appareil électrique à partir des données représentatives de chaque photo et/ou vidéo reçues et identifiées dans la base de données,
- transmission par le serveur central des données représentatives de l'état de fonctionnement de l'appareil électrique au terminal mobile.

Selon l'invention, le procédé comporte également :
- une étape préalable d'identification de l'appareil électrique, cette étape d'identification étant mise en oeuvre par une capture d'une photo de la face de l'appareil électrique à l'aide du terminal mobile,
- une étape de transmission de données représentatives de ladite photo du terminal mobile vers le serveur central,
- une étape de comparaison par le serveur central des données représentatives de ladite photo avec des données représentatives de photos stockées dans une base de données gérée par le serveur central,
- une étape de transmission par le serveur central de données représentatives de l'identification de l'appareil électrique vers le terminal mobile.

### Brève description des figures

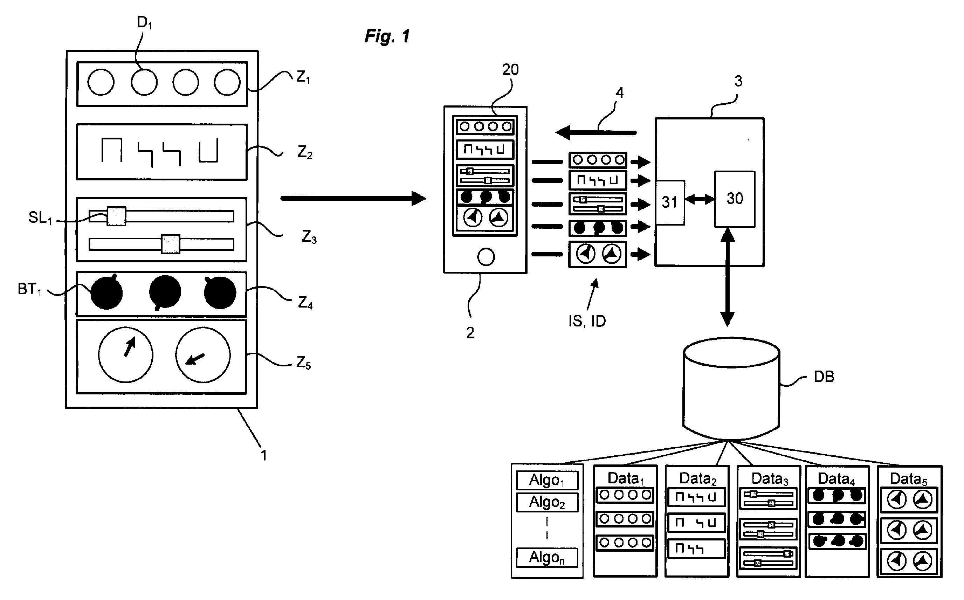

D'autres caractéristiques et avantages vont apparaître dans la description détaillée qui suit faite en regard des dessins annexés dans lesquels la figure 1 représente le système de détermination d'un état de fonctionnement d'un appareil électrique conforme à l'invention.

### Description détaillée d'au moins un mode de réalisation

L'invention concerne un système de détermination d'un état de fonctionnement d'un appareil électrique. Bien entendu, par appareil électrique, on entend également appareil électronique. Dans la suite de la description, le terme "appareil électrique" peut également se comprendre comme un groupe de plusieurs appareils électriques.

Dans la suite de la description, un appareil électrique 1 est par exemple un équipement d'automatisme industriel ou tout autre appareil doté sur l'une de ses faces, par exemple sa face avant, d'une interface homme-machine basique composée de boutons de réglage, tels que par exemple bouton tournant, bouton glissant et/ou d'organes de signalisation visuelle statique ou dynamique tels que des diodes électroluminescentes allumées en permanence ou clignotantes. La figure 1 montre un appareil comportant une première zone Z₁ dotée de diodes électroluminescentes D₁, une deuxième zone Z₂ comportant par exemple un écran à affichage sept segments, une troisième zone Z₃ comportant des boutons glissants SL₁, une quatrième zone Z₄ comportant des boutons tournants BT₁ et une cinquième zone Z₅ comportant des indicateurs de niveau.

Selon l'invention, le système de détermination de l'état de fonctionnement d'un appareil électrique fonctionne préférentiellement en deux temps.

Dans un premier temps, il s'agit de récupérer des données représentatives d'une identification de l'appareil électrique 1 puis dans un deuxième temps de récupérer des données représentatives de l'état de fonctionnement de l'appareil électrique 1.

Par données représentatives de l'identification de l'appareil électrique 1, il faut comprendre qu'il s'agit par exemple de coordonnées identifiant les zones visuelles actives de l'appareil électrique dans un repère normé lié à l'appareil électrique et de données indiquant le type de chaque zone identifiée, c'est-à-dire statique ou dynamique. Le système pourra ensuite se focaliser sur ces zones pour extraire des informations statiques et/ou dynamiques.

Les informations visuelles statiques IS sont extraites des zones de l'appareil électrique qui restent fixes pendant le temps de la capture photo et/ou vidéo et qui peuvent prendre plusieurs positions, couleurs ou formes. Les informations visuelles statiques IS peuvent être à variabilité finie, c'est-à-dire qu'elles sont parfaitement déterminées et connues, ou être à variabilité non finie, c'est-à-dire qu'elles ne sont pas prédéfinies. Les informations statiques sont par exemple définies par l'état de diodes électroluminescentes, la position d'un curseur ou d'une roue codeuse... Sur la figure 1, les zones statiques sont par exemple la première zone Z₁, la troisième zone Z₃ et la quatrième zone Z₄. La première zone Z₁ comporte des informations statiques car les diodes électroluminescentes D₁ peuvent être dans un état fixe, c'est-à-dire non-clignotant. La troisième zone Z₃ comporte des informations statiques à variabilité non finie car les boutons glissants SL₁ peuvent prendre n'importe quelle position le long de leur rail de glissement et la quatrième zone Z₄ comporte des informations statiques à variabilité finie car les boutons tournants BT₁ peuvent prendre des positions déterminées.

Les informations visuelles dynamiques ID sont extraites des zones de l'appareil qui changent d'état ou qui ne sont pas fixes. Les changements d'état peuvent être périodiques, par exemple lorsqu'il s'agit d'une diode électroluminescente qui clignote à intervalles réguliers, ou les changements d'état peuvent être apériodiques. Sur la figure 1, les zones dynamiques sont par exemple la première zone Z₁, la deuxième zone Z₂ et la cinquième zone Z₅. Dans la première zone Z1, certaines diodes électroluminescentes D₁ employées peuvent être clignotantes et sont donc susceptibles de changer d'état à chaque instant. Dans la deuxième zone Z₂, les informations affichées sur l'écran sept segments peuvent changer en permanence et dans la cinquième zone Z₅, les indicateurs de niveau peuvent changer de position à chaque instant.

Par données représentatives de l'état de fonctionnement de l'appareil électrique 1, il faut comprendre qu'il s'agit par exemple d'informations liées à la mise en service ou au fonctionnement de l'appareil électrique 1 identifié ou d'une partie de l'appareil électrique 1 identifié ou d'informations permettant d'indiquer la nature d'un défaut en cours sur l'appareil électrique 1.

En référence à la figure 1, le système de l'invention destiné à déterminer l'état de fonctionnement de l'appareil électrique 1 comporte un terminal mobile 2 et un serveur central 3.

Selon l'invention, le terminal mobile 2 comporte :
- des moyens de capture photo et/ou vidéo lui permettant de prendre une ou plusieurs photos et/ou vidéos de la face avant de l'appareil électrique 1 ou d'une partie de la face avant de l'appareil électrique 1,
- des moyens d'affichage 20 tels que par exemple un écran,
- une interface de communication lui permettant de se connecter à un réseau de communication 4, pour envoyer des données représentatives de chaque photo et/ou vidéo vers le serveur central 3 sous forme d'une ou plusieurs requêtes,
- des moyens de traitement destinés à lancer et gérer une application de détermination de l'état de fonctionnement de l'appareil électrique (désignée ci-après *"application-état de fonctionnement"*), ladite *application-état de fonctionnement* permettant d'activer les moyens de capture photo et/ou vidéo et par exemple de visualiser les données représentatives de l'identification de l'appareil électrique 1 et les données représentatives de l'état de fonctionnement de l'appareil électrique 1. Les moyens de traitement pourront également permettre d'optimiser la quantité de données à envoyer dans chaque requête destinée au serveur central 3.

Le serveur central 3 comporte :
- une interface de communication 31 lui permettant de se connecter au réseau de communication 4 pour recevoir les données représentatives de chaque photo et/ou vidéo en provenance du terminal mobile 2,
- des moyens de traitement 30 lui permettant d'analyser lesdites données représentatives de chaque photo et/ou vidéo reçues et de gérer une base de données DB stockée localement ou à distance.

Le réseau de communication 4 employé sera par exemple un réseau sans-fil de téléphonie mobile établi entre le terminal mobile 2 et le serveur central 3 ou un réseau de communication IP connecté à l'Internet. Dans ce deuxième cas, le terminal mobile 2 pourra par exemple être connecté sans fil via WIFI ou Bluetooth à un modem connecté à un réseau IP.

La base de données DB gérée par le serveur central 3 stocke, pour une pluralité d'appareils électriques différents, des données (Data₁-Data₅) représentatives de photos et/ou vidéos correspondant à tous les états possibles de l'appareil électrique 1. Ces données représentatives de photos et/ou vidéos comportent les informations statiques et les informations dynamiques décrites ci-dessus rangées dans la base de données DB par zone visuelle statique ou dynamique de l'appareil électrique 1.

Les informations statiques sont décrites dans la base de données DB pour chaque état distinct, par exemple sous la forme d'une photo ou d'une signature réalisée sur la photo. Il s'agira par exemple de photos de tous les états statiques pris par une diode électroluminescente D₁.

Les informations dynamiques sont par exemple décrites dans la base de données DB par la longueur de la séquence en cas de séquence répétitive, par une signature de la séquence en s'appuyant par exemple sur la période et la durée des événements de la séquence, telles que la durée d'allumage ou la durée d'extinction de chaque diode électroluminescente D1.

De plus, pour chaque appareil électrique 1, la base de données DB stocke un ou plusieurs algorithmes d'analyse Algo₁-Algoₙ permettant de générer les données représentatives de l'état de fonctionnement de l'appareil électrique 1 concerné à partir des données représentatives de chaque photo et/ou vidéo reçues et identifiées. La base de données pourra comporter des algorithmes d'analyse s'appliquant à plusieurs zones statiques ou dynamiques en vue d'en déduire un état de fonctionnement en fonction des informations présentes dans les différentes zones ou des algorithmes d'analyse attachés à une zone statique ou dynamique pour en déduire un état de fonctionnement de l'appareil à partir des informations de ladite zone.

Le procédé de détermination de l'état de fonctionnement de l'appareil électrique 1 comporte préférentiellement plusieurs étapes successives mises en oeuvre par l'opérateur à partir du terminal mobile 2. Ces étapes sont mises en oeuvre alors que l'opérateur a lancé sur le terminal mobile *l'application-état de fonctionnement.*
1) Etape n°1 - Identification de l'appareil électrique 1 et des zones visuelles de l'appareil électrique 1.

Dans cette première étape, l'opérateur prend une photo de la face avant de l'appareil électrique 1. Préférentiellement, *l'application-état de fonctionnement* peut comporter un module permettant de réduire la taille du fichier contenant la photo si celui-ci est trop lourd, même si la qualité de la photo doit rester suffisante pour permettre d'identifier l'appareil électrique 1.

Dans cette première étape, grâce à *l'application-état de fonctionnement* et son interface de communication, le terminal mobile 2 envoie, via le réseau de communication 4, les données représentatives de cette photo vers le serveur central 3. Les données représentatives de la photo pourront être le fichier lui-même, un fichier compressé, ou une signature créée sur la base de la photo par le terminal mobile 2.

Après réception des données représentatives de la photo par son interface de communication, le serveur central 3 consulte la base de données DB afin de récupérer les données représentatives de l'identification de l'appareil électrique 1 concerné. Les données représentatives de l'identification de l'appareil électrique 1 sont alors transmises par le serveur central 3 au terminal mobile 2. Grâce à *l'application-état de fonctionnement,* le terminal mobile 2 affiche sur son écran 20 les données représentatives de l'identification récupérées. Ces données permettent à l'opérateur de visualiser sur l'écran 20 du terminal mobile 2 les zones statiques et dynamiques de l'appareil électrique 1 qu'il lui faudra capturer afin d'effectuer les comparaisons dans la base de données DB.

Dans le cas d'une mise en service d'un appareil ou d'une opération de maintenance, les données représentatives de l'identification de l'appareil électrique peuvent s'avérer suffisantes car elles permettent par exemple à l'opérateur de connaître la fonction de chaque zone de l'appareil électrique, par exemple en cliquant sur l'une des zones sur l'écran 20 du terminal mobile 2, ou de récupérer des informations liées à la configuration de l'appareil.
2) Etape n°2 - Capture des informations pertinentes par le terminal mobile 2 et envoi de ces informations vers le serveur central 3.

Dans cette deuxième étape, le terminal capture les zones statiques et dynamiques identifiées.

Préférentiellement, la capture des zones statiques peut être réalisée directement par le terminal mobile en réalisant une extraction des zones statiques de la photo prise précédemment lors de la première étape. Les informations visuelles statiques IS sont ensuite envoyées par le terminal mobile 2 vers le serveur central 3 via le réseau de communication 4.

Pour les zones dynamiques, l'opérateur réalise une vidéo à l'aide du terminal mobile 2. Pour les zones dynamiques périodiques, l'opérateur doit filmer la zone au moins sur une période et pour les zones dynamiques apériodiques, l'opérateur doit filmer un temps suffisant pour être sûr de voir passer une balise de début de message puis une balise de fin de message. Les informations visuelles dynamiques ID peuvent être, au moins en partie, extraites par *l'application-état de fonctionnement* installée sur le terminal mobile 2 en détectant les zones comportant des variations visuelles et en codant ces variations par leur fréquence, leur description, leur type... Les informations dynamiques ainsi obtenues sont envoyées par le terminal mobile 2, via le réseau de communication 4, vers le serveur central 3.
3) Etape n°3 - Analyse par le serveur central 3 des informations, génération des données représentatives de l'état de fonctionnement de l'appareil électrique 1 et envoi de ces données vers le terminal mobile 2.

Durant cette troisième étape, le serveur central 3 compare les informations statiques IS et dynamiques ID reçues avec les informations statiques et dynamiques Data₁, Data₂, Data₃, Data₄, Data₅ stockées dans sa base de données DB.

Pour une information statique, la comparaison peut être réalisée de manière basique ou de manière avancée. La comparaison basique est réalisée entre une photo reçue par le serveur central 3 et des photos stockées dans la base de données DB et représentant tous les états possibles de la zone statique. La comparaison avancée est réalisée entre une signature de la photo et des signatures des photos stockées dans la base de données DB.

Pour une information dynamique, la comparaison peut également être réalisée de manière basique ou de manière avancée. La comparaison basique est réalisée entre la séquence filmée reçue par le serveur central 3 et toutes les séquences stockées dans la base de données DB pour cette zone dynamique. La comparaison avancée est réalisée entre une signature générée sur la base de la séquence filmée et des signatures des séquences filmées stockées dans la base de données DB.

Pour les informations statiques ou dynamiques, la comparaison avancée est bien entendu plus rapide mais nécessite la génération préalable d'une signature dans le terminal mobile 2 ou le serveur central 3. L'algorithme de génération des signatures est par exemple très classique.

Une fois que toutes les informations statiques et dynamiques ont été retrouvées dans la base de données DB, le serveur central 3 exécute l'algorithme d'analyse sur ces informations afin d'en déduire les données représentatives de l'état de fonctionnement de l'appareil électrique 1. Ces données peuvent être mises en forme par le serveur central 3 avant transmission ou par le terminal mobile 2 après réception.
4) Etape n°4 - Affichage sur le terminal mobile 2 des données reçues

Le terminal mobile 2 affiche sur son écran 20 les données représentatives de l'état de fonctionnement de l'appareil électrique 1, les données étant éventuellement mises en forme. L'affichage est par exemple réalisé à travers son *application-état de fonctionnement.* Les données consistent par exemple en des instructions à suivre pour configurer l'appareil électrique 1 ou régler le défaut de fonctionnement signalé sur les zones statiques et/ou dynamiques de l'appareil électrique 1.

Cet affichage peut être réalisé en réalité augmentée en superposant les données récupérées sur la photo de la face avant de l'appareil électrique 1 en vue de guider l'opérateur dans ses manipulations.

En variante de réalisation, on peut imaginer que l'étape n°1 d'identification de l'appareil électrique intègre l'étape n°2 de capture des informations pertinentes par le terminal mobile 2. Cette variante peut notamment être mise en oeuvre si l'appareil électrique 1 ne comporte que des zones statiques. Le terminal mobile 2 détecte alors automatiquement les zones statiques et envoie les informations statiques vers le serveur central 3. Lors de l'étape n°3, le serveur central 3 identifie alors l'appareil électrique 1 et analyse les informations statiques reçues. Dans cette variante de réalisation, *l'application-état de fonctionnement* peut générer un message sur le terminal mobile demandant à l'opérateur quelle(s) zone(s) il souhaite analyser pour n'envoyer que les informations des zones choisies.

## Revendications

1. Système de détermination d'un état de fonctionnement d'un appareil électrique (1), ledit appareil électrique (1) comportant une face présentant au moins des organes de signalisation visuelle statique ou dynamique de l'état de fonctionnement de l'appareil électrique, ledit système comportant :
- un terminal mobile (2) doté de moyens de captures photo et/ou vidéo pour capturer une ou plusieurs photos et/ou vidéos de ladite face de l'appareil électrique et une interface de communication agencée pour envoyer des données représentatives de chaque photo et/ou vidéo de la face de l'appareil électrique sur un réseau de communication (4),
- un serveur central (3) comportant une interface de communication connectée au réseau de communication (4) et agencée pour recevoir lesdites données représentatives de chaque photo et/ou vidéo provenant du terminal mobile (2) et des moyens de traitement (30) destinés à comparer lesdites données représentatives de chaque photo et/ou vidéo reçues avec des données représentatives de photos et/ou vidéos stockées dans une base de données (DB) gérée par le serveur central (3), à générer des données représentatives de l'état de fonctionnement de l'appareil électrique (1) à partir des données représentatives de chaque photo et/ou vidéo reçues et identifiées dans la base de données (DB) et à envoyer au terminal mobile (2) via le réseau de communication (4) lesdites données représentatives de l'état de fonctionnement de l'appareil électrique (1).

2. Système selon la revendication 1, **caractérisé en ce que** la base de données (DB) stocke également des données représentatives d'une identification de l'appareil électrique (1) à comparer avec des données représentatives d'une photo de la face de l'appareil électrique (1) envoyée par le terminal mobile (2).

3. Système selon la revendication 1, **caractérisé en ce que** le terminal mobile (2) comporte des moyens de traitement destinés à lancer et gérer une application de détermination de l'état de fonctionnement de l'appareil électrique (1), ladite application permettant d'activer les moyens de capture photo et/ou vidéo et de visualiser les données représentatives de l'identification de l'appareil électrique (1) et les données représentatives de l'état de fonctionnement de l'appareil électrique.

4. Système selon la revendication 1, **caractérisé en ce que** la base de données stocke, pour l'appareil électrique (1), un algorithme d'analyse permettant de générer les données représentatives de l'état de fonctionnement de l'appareil électrique à partir des données représentatives de chaque photo et/ou vidéo reçues du terminal mobile (2) et identifiées dans la base de données (DB).

5. Système selon la revendication 1, **caractérisé en ce que** le réseau de communication (4) est un réseau sans-fil de téléphonie mobile ou un réseau de communication de type IP connecté à l'Internet.

6. Procédé de détermination de l'état de fonctionnement d'un appareil électrique (1), ledit appareil électrique (1) comportant une face présentant des organes de réglage de sa configuration et/ou de visualisation statique ou dynamique de son état, ledit procédé comportant les étapes suivantes :
- capture d'une ou plusieurs photos et/ou vidéos de ladite face de l'appareil électrique (1) à l'aide d'un terminal mobile (2),
- transmission par le terminal mobile (2) de données représentatives de chaque photo et/ou vidéo à travers un réseau de communication (4) vers un serveur central (3),
- comparaison par le serveur central (3) des données représentatives de chaque photo et/ou vidéo avec des données représentatives de photos et/ou vidéos stockées dans une base de données (DB) gérée par le serveur central (3),
- génération par le serveur central (3) des données représentatives de l'état de fonctionnement de l'appareil électrique à partir des données représentatives de chaque photo et/ou vidéo reçues et identifiées dans la base de données (DB),
- transmission par le serveur central (3) des données représentatives de l'état de fonctionnement de l'appareil électrique (1) au terminal mobile (2).

7. Procédé selon la revendication 6, **caractérisé en ce qu'**il comporte :
- une étape préalable d'identification de l'appareil électrique (1), cette étape d'identification étant mise en oeuvre par une capture d'une photo de la face de l'appareil électrique (1) à l'aide du terminal mobile (2),
- une étape de transmission de données représentatives de ladite photo du terminal mobile (2) vers le serveur central (3),
- une étape de comparaison par le serveur central (3) des données représentatives de ladite photo avec des données représentatives de photos stockées dans une base de données (DB) gérée par le serveur central (3),
- une étape de transmission par le serveur central (3) de données représentatives de l'identification de l'appareil électrique (1) vers le terminal mobile (2).

## Patentansprüche

1. System zur Bestimmung eines Betriebszustands eines elektrischen Geräts (1), wobei das elektrische Gerät (1) eine Seite aufweist, die mindestens Elemente zur statischen oder dynamischen visuellen Anzeige des Betriebszustands des elektrischen Geräts enthält, wobei das System aufweist:
- ein bewegliches Endgerät (2), das mit Einrichtungen zur Foto- und/oder Videoerfassung versehen ist, um eines oder mehrere Fotos und/oder Videos der Seite des elektrischen Geräts zu erfassen, und eine Kommunikationsschnittstelle, die eingerichtet ist, um für jedes Foto und/oder Video der Seite des elektrischen Geräts repräsentative Daten an ein Kommunikationsnetzwerk (4) zu senden,
- einen zentralen Server (3), der eine Kommunikationsschnittstelle, die mit dem Kommunikationsnetzwerk (4) verbunden und eingerichtet ist, um die vom beweglichen Endgerät (2) kommenden für jedes Foto und/oder Video repräsentativen Daten zu empfangen, und Verarbeitungseinrichtungen (30) aufweist, die dazu bestimmt sind, die empfangenen für jedes Foto und/oder Video repräsentativen Daten mit in einer Datenbank (DB) gespeicherten für Fotos und/oder Videos repräsentativen Daten zu vergleichen, die vom zentralen Server (3) verwaltet wird, ausgehend von den empfangenen und in der Datenbank (DB) identifizierten für jedes Foto und/oder Video repräsentativen Daten für den Betriebszustand des elektrischen Geräts (1) repräsentative Daten zu generieren und die für den Betriebszustand des elektrischen Geräts (1) repräsentativen Daten über das Kommunikationsnetzwerk (4) an das bewegliche Endgerät (2) zu senden.

2. System nach Anspruch 1, **dadurch gekennzeichnet, dass** die Datenbank (DB) ebenfalls für eine Identifizierung des elektrischen Geräts (1) repräsentative Daten speichert, die mit repräsentativen Daten eines Fotos der Seite des elektrischen Geräts (1) zu vergleichen sind, das vom beweglichen Endgerät (2) gesendet wird.

3. System nach Anspruch 1, **dadurch gekennzeichnet, dass** das bewegliche Endgerät (2) Verarbeitungseinrichtungen aufweist, die dazu bestimmt sind, eine Anwendung zur Bestimmung des Betriebszustands des elektrischen Geräts (1) zu starten und zu verwalten, wobei die Anwendung es ermöglicht, die Foto- und/oder Video-Erfassungseinrichtungen zu aktivieren und die für die Identifizierung des elektrischen Geräts (1) repräsentativen Daten und die für den Betriebszustand des elektrischen Geräts repräsentativen Daten anzuzeigen.

4. System nach Anspruch 1, **dadurch gekennzeichnet, dass** die Datenbank einen Analysealgorithmus für das elektrische Gerät (1) speichert, der es ermöglicht, die für den Betriebszustand des elektrischen Geräts repräsentativen Daten ausgehend von den vom beweglichen Endgerät (2) empfangenen und in der Datenbank (DB) identifizierten für jedes Foto und/oder Video repräsentativen Daten zu generieren.

5. System nach Anspruch 1, **dadurch gekennzeichnet, dass** das Kommunikationsnetzwerk (4) ein drahtloses Mobiltelefonnetz oder ein Kommunikationsnetzwerk vom Typ IP ist, das mit dem Internet verbunden ist.

6. Verfahren zur Bestimmung des Betriebszustands eines elektrischen Geräts (1), wobei das elektrische Gerät (1) eine Seite aufweist, die Elemente zur Einstellung seiner Konfiguration und/oder zur statischen oder dynamischen Anzeige seines Zustands enthält, wobei das Verfahren die folgenden Schritte aufweist:
- Erfassen eines oder mehrerer Fotos und/oder Videos der Seite des elektrischen Geräts (1) mit Hilfe eines beweglichen Endgeräts (2),
- Übertragen, durch das bewegliche Endgerät (2), von für jedes Foto und/oder Video repräsentativen Daten über ein Kommunikationsnetzwerk (4) an einen zentralen Server (3),
- Vergleich, durch den zentralen Server (3), der für jedes Foto und/oder Video repräsentativen Daten mit für Fotos und/oder Videos repräsentativen Daten, die in einer vom zentralen Server (3) verwalteten Datenbank (DB) gespeichert sind,
- Generieren, durch den zentralen Server (3), der für den Betriebszustand des elektrischen Geräts repräsentativen Daten ausgehend von den empfangenen und in der Datenbank (DB) identifizierten für jedes Foto und/oder Video repräsentativen Daten,
- Übertragen, durch den zentralen Server (3), der für den Betriebszustand des elektrischen Geräts (1) repräsentativen Daten an das bewegliche Endgerät (2).

7. Verfahren nach Anspruch 6, **dadurch gekennzeichnet, dass** es aufweist:
- einen vorhergehenden Schritt der Identifizierung des elektrischen Geräts (1), wobei dieser Identifizierungsschritt durch eine Erfassung eines Fotos der Seite des elektrischen Geräts (1) mit Hilfe des beweglichen Endgeräts (2) durchgeführt wird,
- einen Schritt der Übertragung von für das Foto repräsentativen Daten vom beweglichen Endgerät (2) an den zentralen Server (3),
- einen Schritt des Vergleichs, durch den zentralen Server (3), der für das Foto repräsentativen Daten mit für Fotos repräsentativen Daten, die in einer vom zentralen Server (3) verwalteten Datenbank (DB) gespeichert sind,
- einen Schritt der Übertragung, durch den zentralen Server (3), von für die Identifizierung des elektrischen Geräts (1) repräsentativen Daten an das bewegliche Endgerät (2).

## Claims

1. A system for determining an operational state of an electric apparatus (1), said electric apparatus (1) including a face having at least devices for static or dynamic visual signaling of the operational state of the electric apparatus, said system including:
- a mobile terminal (2) provided with photograph and/or video capture means in order to capture one or more photographs and/or videos of said face of the electric apparatus and a communication interface arranged to send data representing each photograph and/or video of the face of the electric apparatus over a communication network (4),
- a central server (3) including a communication interface connected to the communication network (4) and arranged to receive said data representing each photograph and/or video coming from the mobile terminal (2) and processing means (30) for comparing said received data representing each photograph and/or video with data representing photographs and/or videos, which data is stored in a database (DB) managed by the central server (3), for generating data representing the operational state of the electric apparatus (1) from the data representing each photograph and/or video, which data is received and identified in the database (DB), and for sending to the mobile terminal (2), via the communication network (4), said data representing the operational state of the electric apparatus (1).

2. The system as claimed in claim 1, **characterized in that** the database (DB) also stores data representing an identification of the electric apparatus (1) to be compared with data representing a photograph of the face of the electric apparatus (1), which photograph is sent by the mobile terminal (2).

3. The system as claimed in claim 1, **characterized in that** the mobile terminal (2) includes processing means for launching and managing an application for determining the operational state of the electric apparatus (1), said application allowing the photograph and/or video capture means to be activated and the data representing the identification of the electric apparatus (1) and the data representing the operational state of the electric apparatus to be displayed.

4. The system as claimed in claim 1, **characterized in that** the database stores, for the electric apparatus (1), an analysis algorithm for generating the data representing the operational state of the electric apparatus from the data representing each photograph and/or video, which data is received from the mobile terminal (2) and identified in the database (DB).

5. The system as claimed in claim 1, **characterized in that** the communication network (4) is a mobile telephone wireless network or an IP communication network connected to the Internet.

6. A method for determining the operational state of an electric apparatus (1), said electric apparatus (1) including a face having devices for adjusting the configuration thereof and/or for static or dynamic display of the state thereof, said method including the following steps:
- capture of one or more photographs and/or videos of said face of the electric apparatus (1) using a mobile terminal (2),
- transmission by the mobile terminal (2) of data representing each photograph and/or video through a communication network (4) to a central server (3),
- comparison by the central server (3) of the data representing each photograph and/or video with data representing photographs and/or videos, which data is stored in a database (DB) managed by the central server (3),
- generation by the central server (3) of the data representing the operational state of the electric apparatus from the data representing each photograph and/or video, which data is received and identified in the database (DB),
- transmission by the central server (3) of the data representing the operational state of the electric apparatus (1) to the mobile terminal (2).

7. The method as claimed in claim 6, **characterized in that** it includes:
- a prior step for identifying the electric apparatus (1), this identification step being implemented by capture of a photograph of the face of the electric apparatus (1) using the mobile terminal (2),
- a step of transmitting data representing said photograph from the mobile terminal (2) to the central server (3),
- a step of the central server (3) comparing the data representing said photograph with data representing photographs, which data is stored in a database (DB) managed by the central server (3),
- a step of the central server (3) transmitting data representing the identification of the electric apparatus (1) to the mobile terminal (2).
